# EUROPÄISCHE PATENTSCHRIFT

(11) **EP 0 733 572 B1**
(45) Veröffentlichungstag und Bekanntmachung des Hinweises auf die Patenterteilung: **23.11.2005**
(21) Anmeldenummer: 96103841.1
(22) Anmeldetag: 12.03.1996
(51) Int. Cl.: B65H 23/038

(54) **Vorrichtung zur mittigen Führung von Kunststoffbahnen in Extrusionsanlagen**
Device for the centric positioning of plastic webs in extrusion installations
Dispositif de guidage et de cintrage dans une installation d'extrusion d'une bande en matière plastique

(30) Priorität: 18.03.1995 DE 29504694 U
(43) Veröffentlichungstag der Anmeldung: 25.09.1996
(73) Patentinhaber: Röhm GmbH & Co. KG, 64293 Darmstadt (DE)
(72) Erfinder: Behringer, Andreas, 64291 Darmstadt (DE); Funk, Karl, 64347 Griesheim (DE); Haun, Erhard, 64347 Griesheim (DE)

(56) Entgegenhaltungen:
- EP-A- 0 429 161
- EP-A- 0 501 604
- DE-A- 3 339 886
- DE-A- 3 814 596
- DE-U- 9 415 619
- PATENT ABSTRACTS OF JAPAN vol. 017, no. 336 (M-1435), 25.Juni 1993 & JP-A-05 042579 (ASAHI CHEM IND CO LTD), 23.Februar 1993,

## Beschreibung

### Gebiet der Erfindung

Die Erfindung betrifft das Gebiet der Extrusionstechnik für thermoplastisch verformbare Kunststoffe, insbesondere die Herstellung von Kunststoffplatten und -folien gemäß dem Merkmalen des Oberbegriffs des anliegenden Anspruchs 1. Sie beschreibt eine neue, automatische Regelungsvorrichtung am Walzenabzug, die die Führung der extrudierten Kunststoffbahn nach dem Verlassen des Walzenglättwerks in der Anlagenmitte sicherstellt.

### Stand der Technik

Extrusionsanlagen für thermoplastische Kunststoffe sind bekannt. Das geschmolzene Polymere verlässt den Extruder über eine Breitschlitzdüse und durchläuft ein Walzenglättwerk, wobei die Dicke der Kunststoffbahn festgelegt wird. Der Begriff Kunststoffbahn umfasst im Folgenden sowohl Platten als auch Folien aus Kunststoff. Die Kunststoffbahn verlässt das Walzenglättwerk bereits in einem weitgehend erstarrten Zustand. Sie läuft horizontal über eine Rollenbahn zur weiteren Abkühlung und wird von zwei Abzugswalzen übernommen. Diese entscheiden über die Laufrichtung der Kunststoffbahn. Der Drehpunkt für die Laufrichtung liegt an der Stelle, wo die Kunststoffbahn das Glättwerk verlässt. Läuft die Kunststoffbahn horizontal nicht mittig, d.h. symmetrisch zur geometrischen Mitte der Anlage, sondern seitlich weg, würde dies in den Nachfolgeeinrichtungen wie Randbeschnittsäge, Quertrennsäge, Stapler oder Wickler zu Störungen führen: Das Produkt, der Plattenabschnitt, wäre z. B. nicht rechtwinkelig und somit Abfall. Daher wird die mittige horizontale Führung der Kunststoffbahn - und dies ist der Stand der Technik - ständig durch eine Person überwacht. Bei Abweichungen vom mittigen Lauf müssen die Abzugswalzen geöffnet werden, damit die Kunststoffbahn von Hand in die richtige Lage gezogen werden kann.

Eine andere Möglichkeit ist, den Winkel der Abzugswalzen zur Abzugsrichtung zu regulieren. Für die exakte Ein- bzw. Nachregulierung muß dann ein mechanisches Stellglied eingebaut sein. Außer diesen Möglichkeiten bietet der Stand der Technik noch die sogenannte Drehrahmen-Regelung zur Steuerung der Kunststoffbahn (Fa. Erhard und Leimer, Augsburg). Sie wird für extrudierte Folien eingesetzt und sorgt durch Schwenken des Drehrahmens für eine Steuerung der Folienbahn. Durch laufendes Schwenken des Drehrahmens kann auch eine changierende Aufwicklung der Folie erreicht werden. Zur Steuerung plattenförmiger Kunststoffbahnen ist diese Vorrichtung nicht geeignet.

Für die Breitenmessung von Kunststoffbahnen sind dem Fachmann verschiedene Messsensoren bekannt. Es können optische, thermographische oder mechanische Messsensoren verwendet werden. Messeinrichtungen, die mittels zweier quer zur Laufrichtung beweglich angebrachter Infrarot-Messfühler die Bahnkanten abtasten und die Bahnbreite anzeigen können (Fa. Octagon, Würzburg), sind Stand der Technik.
Man hat hier zwar eine dauernde Kontrolle über die Breite der Kunststoffbahn, kann aber aus dem Messwert nicht direkt ersehen, ob sie mittig geführt wird. Störungen durch seitliches Weglaufen der Kunststoffbahn sind nicht ausgeschlossen.

DE-A 38 14 596 betrifft ein Verfahren zum Verhindern von Schlängelbewegungen eines Blattes oder einer Bahn in einer Fördereinrichtung, bei der ein Tonerbild auf die Bahn übertragen wurde und beim Passieren eines Heizwalzenpaars fixiert wird. Bei der Bahn handelt es sich um Kopierpapier. Die Regelung betrifft offenbar lediglich den Anfahrvorgang.

JP-A-6042579 und JP-A-6190894 beschreiben Verfahren und Vorrichtungen zur Regelung von extrudierten Kunststoffbahnen.

### Aufgabe und Lösung

Ziel der Erfindung ist es, eine Vorrichtung zu schaffen, die es erlaubt, den Lauf der Kunststoffbahn nach dem Verlassen des Glättwerks automatisch horizontal möglichst genau in der Anlagenmitte zu halten, um eine kontinuierliche Beobachtung und Korrektur zu erübrigen. Ein anderer Vorteil ist, dass durch eine konstante Bahnmittenregelung die Toleranzen für den Überstand zu beiden Seiten der Kunststoffbahn gleich und damit klein gehalten werden können, und dadurch der Randbeschnittabfall verringert werden kann. Eine automatische Regelung der Kunststoffbahn in der Anlagenmitte ist besonders wertvoll zu Beginn eines Extrusionslaufes, weil die Aufmerksamkeit des Bedienungspersonals in dieser kritischen Phase der Produktion anderen Parametern gewidmet werden kann. Das schnelle Reagieren der Regelung kommt auch bei dünnen Platten (z.B. 0,5-3 mm) zum Tragen, denn durch die hier möglichen hohen Bahngeschwindigkeiten ist selbst eine kurzfristige Abweichung von der Anlagenmitte fatal.
Eine zusätzliche Aufgabe besteht darin, dass bei symmetrischer Einschnürung bzw. symmetrischer Verbreiterung der Kunststoffbahn, die durch Bahndickenwechsel bei der Plattenextrusion mit Walzenglättwerk verursacht wird, der Reglermechanismus richtig reagiert (d. h., keine Veränderung der Stellgrößen veranlasst), da hier die Lage der Kunststoffbahnmitte gegenüber der der Anlagenmitte in der Regel unverändert bleibt.

Die Aufgabe wurde durch eine Vorrichtung gemäß den Merkmalen des Kennzeichens des anliegenden Anspruchs 1 gelöst. Bevorzugte Ausführungen der Erfindung sind in den Unteransprüchen offenbart. Gemäß der Erfindung wird eine Vorrichtung zur Regelung der horizontalen Laufrichtung einer extrudierten und geglätteten Kunststoffbahn (1) nach Verlassen des Glättwerks in einer Extrusionsanlage vorgesehen, enthaltend eine Abtasteinheit und eine Reglereinheit und die Kombination mit einer Walzenabzugseinrichtung, bestehend aus zwei einen Walzenspalt (7) bildende, achsenparallel gelagerte Abzugswalzen (5), auf die beiderseitigen (rechtes und linkes) Walzenlager (6) getrennt wirkende Stellglieder (11) zur Erhöhung der im Walzenspalt wirkenden Kraft, wobei mittels der Stellglieder die Anpresskraft der Abzugswalzen auf der Seite der Kunststoffbahn, auf der die Bahnkante den geringeren Abstand von der Anlagemitte (4) hat, erhöht wird, so dass sich die Kunststoffbahn im laufenden Betrieb symmetrisch zur Anlagenmitte ausrichtet.

Die erfindungsgemäße Vorrichtung besteht somit aus zwei Teilen, der Abtasteinheit und der Reglereinheit.

### Abtasteinheit

### Aufgabe der Abtasteinheit:

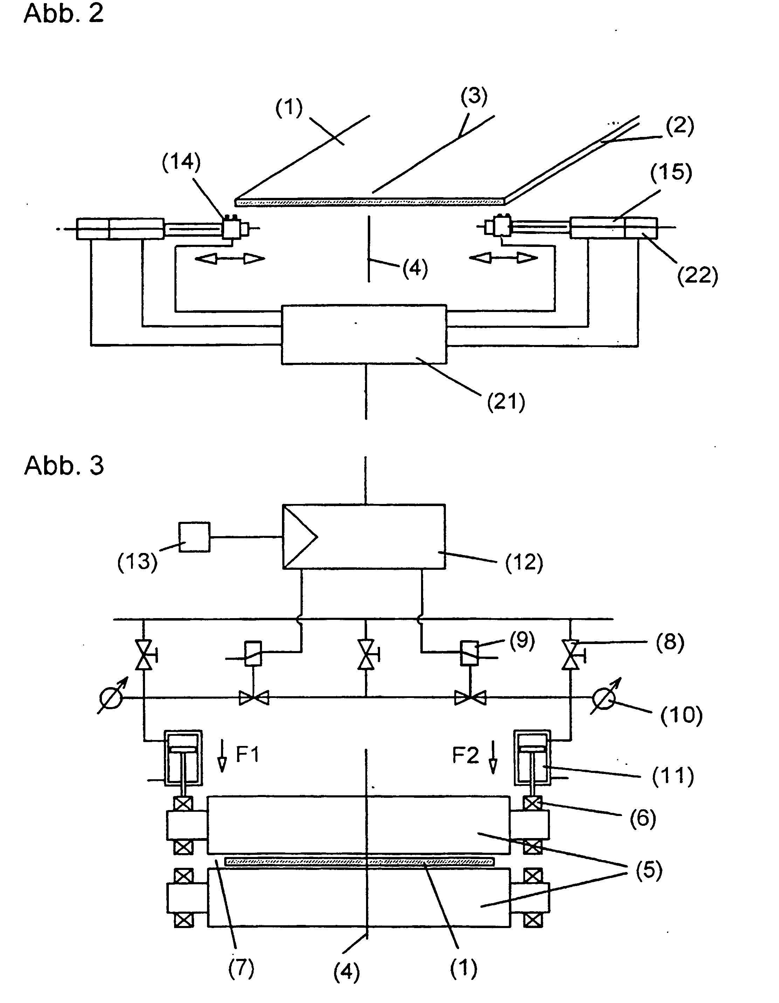

Mit der Abtasteinheit (s. Abb.2) werden die Abstände der Bahnkanten von der Anlagenmitte erfasst.
In der Regel werden zwei gleiche Sensoren für die Erkennung des linken und des rechten Randes der Kunststoffbahn verwendet. Es können im einfachsten Fall Berührungssensoren sein, die durch Federdruck ständig an der Bahnkante entlang geführt werden.
Bevorzugt sind optische Sensoren (14), z.B. Zweiweg-Sensoren, die nach dem Reflexionsprinzip meist mit Infrarot-Strahlung arbeiten. Sie werden für Kunststoffplatten mit glatten oder glatt strukturierten Oberflächen, unterschiedlicher Einfärbung und Transparenz eingesetzt. Für Platten mit aufgerauhter Oberfläche verwendet man Sensoren, die nach dem Durchstrahlungsprinzip, z.B. mit LaserStrahlen arbeiten (Einweg-Prinzip).

In der bevorzugten Ausführung ist die Vorrichtung dadurch gekennzeichnet, dass die Sensoren optische Sensoren sind, die quer zur Abzugsrichtung motorisch verfahren werden können und den Bahnkanten (2) während des Extrusionslaufes mit je einem Stellmotor (15), gesteuert mit den Signalen der Sensoren über die Motorsteuereinheit (21), nachgeführt werden und, dass die mit den Stellmotoren mechanisch gekoppelten Potentiometer ein Spannungsignal abgeben, das der Position der Sensoren, bzw. der Bahnkanten selbst, entspricht. Aus den von beiden Potentiometern abgegebenen Spannungssignalen wird durch additive Verknüpfung ein gemeinsames Spannungssignal gebildet und an den Regler (12) geleitet. Ist keine Kunststoffbahn vorhanden, laufen die Abtastsensoren zur Anlagenmitte in eine Ruheposition (Anschlag). Die additive Verknüpfung der Spannungssignale hat den Vorteil, dass bei symmetrischer Verbreiterung oder symmetrischer Einschnürung der Kunststoffbahn, wie sie bei einem Wechsel der Dicke der Kunststoffbahn auftreten, der Regelmechanismus nicht aktiv wird, da hier die Lage der Kunststoffbahnmitte gegenüber der Anlagenmitte unverändert bleibt.

### Aufbau der Abtasteinheit:

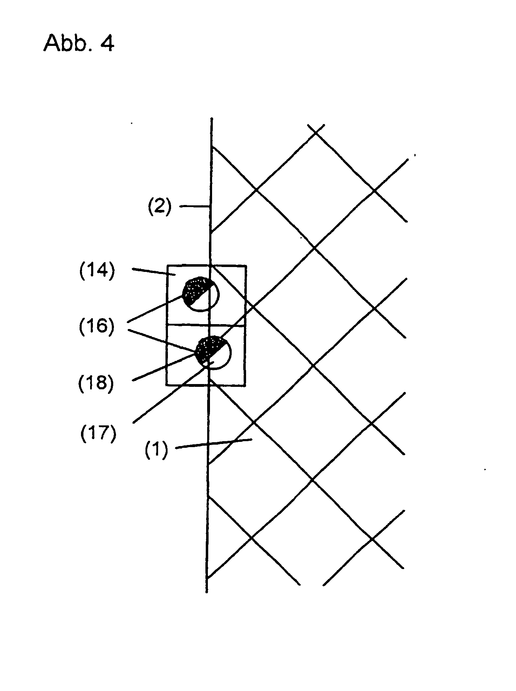

Die Abtasteinheit besteht im wesentlichen aus insgesamt vier Sensoren (14) (zwei für eine Seite) mit je einem Lichtleiter (16), zwei Stellmotoren (15) mit je einem Potentiometer (22) und der Motorsteuereinheit(21).
Jeder Lichtleiter enthält eine Senderfläche (17) und Empfängerfläche (18). Die Lichtleiterpaare sind bevorzugt hintereinander in Abzugsrichtung angebracht. Sie liegen nahezu parallel zur Bahnkante, gegeneinander jeweils um 0,5 - 1 mm quer zur Abzugsrichtung versetzt (siehe Abb. 4). Diese Anordnung sichert eine hohe Ansprechempfindlichkeit für Positionsänderungen.
Die Lichtleiterpaare werden mit einer entsprechend ausgelegten Motorsteuerung so der Bahnkante nachgefahren, dass der erste Lichtleiter von der Kunststoffbahn bedeckt und der zweite Lichtleiter unbedeckt bleibt.

Die Abtasteinheit ist bevorzugt zum Schutz vor Beschädigung beim Anfahren der Extrusionsanlage unterhalb der Kunststoffbahn zwischen den Rollen der Rollenbahn montiert. Andere Positionen, wie z.B. nach dem Walzenabzug oder oberhalb der Rollenbahn, sind auch möglich.

### Reglereinheit

### Aufgabe der Reglereinheit:

Es wurde gefunden, dass der Einsatz eines Dreipunkt-Schrittreglers, bevorzugt eingestellt als unstetiger Regler, für die beschriebene Bahnmittenregelung die beste Lösung darstellt. Eine Einstellung als stetiger Regler ist ebenfalls möglich.
Das von der Abtasteinheit abgegebene Spannungssignal, das der Position der Kunststoffbahnmitte entspricht, dient dem Regler als Istwert. Der Sollwert wird dem Regler vorgegeben, er entspricht genau einer mittigen Stellung der Kunststoffbahn. Solange Sollwert und Istwert innerhalb vorgegebener Grenzen übereinstimmen, tritt der Regler nicht in Aktion; die Anpresskraft der Abzugswalzen wird nicht verändert. Läuft die Kunststoffbahnmitte von der Anlagenmitte weg, wird dies von der Abtasteinheit erfasst, das dazugehörige veränderte Spannungssignal als Istwert dem Regler übermittelt. Aus der Abweichung von Istwert und Sollwert wird das Intervall, in dem die Stellgröße, die Anpresskraft der Abzugswalzen, zeitweise erhöht wird, errechnet. Dies erfolgt so lange, bis der Istwert wieder dem Sollwert entspricht, also die Kunststoffbahnmitte die Anlagenmitte wieder erreicht hat. Je nach positiver oder negativer Abweichung vom Sollwert legt der Regler fest, auf welcher Seite der Walze die Anpresskraft erhöht werden muss.
Die Ansprechempfindlichkeit kann so eingestellt werden, dass die Positionsabweichung der Bahnmitte ± 1 mm nicht überschreitet. Für den Routinebetrieb können Positionsabweichungen von ± 2 mm toleriert werden.

### Aufbau der Reglereinheit:

Die Reglereinheit besteht im wesentlichen aus einem Dreipunktschrittregler (12) mit einem Proportional-Integral- (PI-) Verhalten, zwei pneumatischen Stellgliedern (11) mit Pneumatikventilen (8 und 9), Manometern (10) und einem Umschalter (13), mit dem man zwischen Automatik und Handsteuerung wählen kann.

### Stellglieder und Abzugswalzen

Die Stellglieder, nämlich die beiden pneumatischen Anpresszylinder (11), sind zu beiden Seiten der Abzugswalzen (5) angebracht und wirken bevorzugt auf die beiden Walzenlager (6) der oberen Abzugswalze ein.
Die Abzugswalzen sind normalerweise gummiert und ermöglichen dadurch einen guten Abzug der Kunststoffbahn und die Variation der Anpresskraft. Sie sind bevorzugt übereinander angebracht. Erhöhte Anpresskraft auf einer Seite bedeutet eine geringfügige Verkleinerung des Walzendurchmessers und damit eine verringerte Umfangsgeschwindigkeit der Walze an dieser Stelle. Auf dieser Seite der Abzugswalze wird die Kunststoffbahn daher langsamer transportiert, wodurch die gesamte Kunststoffbahn nach dieser Seite gezogen wird.

Die Förderung der Plattenbahn erfolgt bevorzugt in der Horizontalen. Aber auch davon abweichende Förderungsrichtungen, wie z. B. senkrecht oder in einem Winkel zur Horizontalen sind möglich.

Die Vorrichtung ist für jede beliebige Plattenbreite geeignet. Häufige Plattenbreiten liegen zwischen 0,5 bis 2,5 m. Auch die Plattendicke kann in weiten Grenzen variiert werden, z.B. zwischen 0,5 und 25 mm. Die Zusammensetzung des Extrusionsmaterials spielt keine Rolle: die erfindungsgemäße Vorrichtung kann für die Produktion von sämtichen extrudierbaren, thermoplastischen Kunststoffen eingesetzt werden. Platten aus Polycarbonat, Polymethylmethacrylat, Polymethylmethacrylimid, Polypropylen und anderen (vgl. hierzu beispielsweise E.C. Bernhardt, Processing of Thermoplastic Materials, Reinhold Publishing Corporation, New York, 1959) sind herstellbar. Platten mit glatter, glatt strukturierter oder aufgerauhter Oberfläche, mit unterschiedlicher Einfärbung und Transparenz können in der erfindungsgemäßen Vorrichtung gleichermaßen verwendet werden.
Die erfindungsgemäße Steuerung bzw. Regelung des Laufes einer Plattenbahn ist nicht nur bei Extrusionsprozessen, sondern auch auch bei anderen Prozessen, wo Plattenbahnen gefördert werden, wie Kaschierungs- und Laminierungsvorgängen, sowie Beschichtungen möglich.

### BEISPIEL

Im folgenden Beispiel sind die Parameter zur Führung einer Plattenbahn in der Extrusionsanlage mit einer Dicke von 3 mm und einer Breite von 2000 mm zusammengestellt.

Die Bahngeschwindigkeit beträgt 1,66 m/min. Der Drehpunkt für die Laufrichtung liegt an der Stelle, wo die Plattenbahn das Glättwerk verlässt. Der Abstand zwischen Glättwerk und Abzugswalzen beträgt 10 m. Der pneumatische Druck der Anpresszylinder (11) beträgt 3 bar.
Unter diesen Bedingungen wurde ein Extrusionslauf von einer Dauer von 100 Stunden durchgeführt. Es traten keine Störungen auf, obwohl die Plattendicke mehrmals, insgesamt 12 mal im Bereich von 2 bis 10 mm variiert worden war. Die maximale Abweichung der Kunststoffbahn von der Anlagenmitte betrug ± 2 mm.

### ABBILDUNGEN

Die Erfindung wird durch die nachstehenden Abbildungen erläutert, ist aber nicht auf die dargestellte Ausführungsform beschränkt.

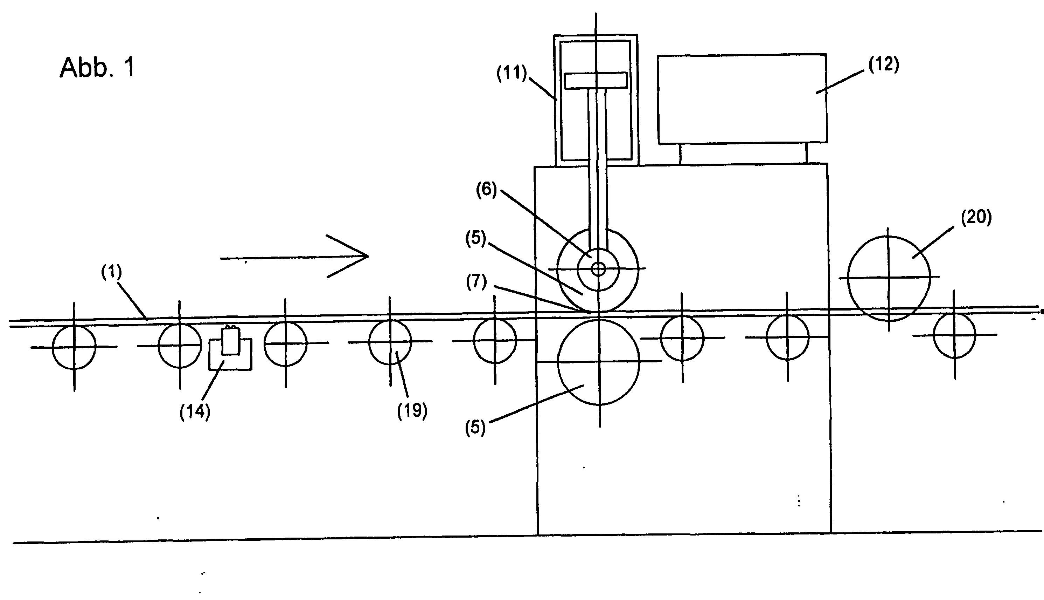

Abb.1: Schnitt längs der Abzugsrichtung durch eine Extrusionsanlage im Bereich der Abzugswalzen; eingezeichnet sind einige Rollen der Rollenbahn (19), die die Kunststoffbahn (1) in der Horizontalen halten, die Abtasteinheit mit dem Sensor (14), die Abzugswalzen (5) mit den Walzenlagern (6), der Walzenspalt (7), der Regler (12) und ein Stellglied (11), sowie von den Nachfolgeeinrichtungen die Randbeschnittsäge (20).

Abb. 2: Schnitt quer zur Abzugsrichtung einer Extrusionsanlage im Bereich der Abtasteinheit (schematisch) mit der Kunststoffbahn (1), der Bahnkante (2), der Kunststoffbahnmitte (3), der Anlagenmitte (4), den Sensoren (14) und mit den elektrischen Verbindungen zwischen den Sensoren und der Motorsteuereinheit (21), sowie zwischen dieser und dem Potentiometer (22) und dem Stellmotor (15).

Abb. 3: Schnitt quer zur Abzugsrichtung einer Extrusionsanlage im Bereich des Walzenabzugs (schematisch). Dargestellt ist die Kunststoffbahn (1), die Anlagenmitte (4), die Abzugswalzen (5), die Walzenlager (6), der Walzenspalt (7) und der Aufbau des pneumatischen Systems: die Handventile (8), die Manometer (10), das Stellglied (11), mit den Druckluftleitungen (etwas dicker gezeichnet), sowie die elektrische Verbindung zwischen dem Regler (12), dem Hand/Automatik-Umschalter (13) und den Magnetventilen (9).

Abb. 4: Eine der beiden Bahnkanten (2) der Kunststoffbahn (1) mit darunter liegenden optischen Sensoren (14) bestehend aus Lichtleiter (16) mit Sender- und Empfängerfläche (17,18) von oben betrachtet.

Die Bezugszeichen werden wie folgt verwendet:
- 1: Kunststoffbahn
- 2: Bahnkante
- 3: Kunststoffbahnmitte
- 4: Anlagenmitte
- 5: Abzugswalzen
- 6: Walzenlager
- 7: Walzenspalt
- 8: Handventil
- 9: Magnetventil
- 10: Manometer
- 11: Stellglied
- 12: Regler
- 13: Hand/Automatik-Umschalter
- 14: Sensoren
- 15: Stellmotor
- 16: Lichtleiter
- 17: Senderfläche des Lichtleiters
- 18: Empfängerfläche des Lichtleiters
- 19: Rollen der Rollenbahn
- 20: Randbeschnittsäge
- 21: Motorsteuereinheit
- 22: Potentiometer
- F1, F2: Anpresskraft

## Patentansprüche

1. Vorrichtung zur Regelung der Laufrichtung einer extrudierten Kunststoffbahn (1) nach Verlassen eines von Walzen (5) und einem Walzenspalt (7) gebildeten Glättwerks in einer Extrusionsanlage, enthaltend zwei den Walzenspalt (7) bildende achsenparallel gelagerte Abzugswalzen (5) und auf die beiderseitigen Walzenlager (6) getrennt wirkende Stellglieder (11) zur Einstellung der im Walzenspalt (7) wirkenden Kraft, enthaltend weiterhin eine Abtasteinheit und eine Reglereinheit, wobei die Abtasteinheit Spannungssignale an die Reglereinheit abgibt, die mittels der Stellglieder (11) die Anpresskraft der Abzugswalzen (5) regelt, indem auf der Seite der Plattenbahn, deren Bahnkante (2) den geringeren Abstand von der Anlagenmitte (4) hat, die Anpresskraft der Abzugswalzen (5) solange erhöht wird, bis sich die Kunststoffbahn (1) im laufenden Betrieb symmetrisch zur Anlagemitte (4) ausrichtet,
**dadurch gekennzeichnet, dass**
die Abtasteinheit die Abstände der Bahnkanten (2) von der Anlagenmitte (4) erfaßt.

2. Vorrichtung entsprechend Anspruch 1, **dadurch gekennzeichnet, daß** die Laufrichtung der Kunststoffbahn (1) horizontal ist.

3. Vorrichtung entsprechend Anspruch 1 oder 2, enthaltend eine zwischen dem Glättwerk (5, 7) und der **Extrusionsanlage** angebrachte Abtasteinheit, enthaltend Sensoren (14) zur Ermittlung des Verlaufs der Kunststoffbahn relativ zur Anlagenmitte (4), sowie eine elektronische Reglereinheit zur Beeinflussung der Stellglieder (11) in Abhängigkeit von den Positionen der Bahnkanten (2).

4. Vorrichtung entsprechend Anspruch 3, **dadurch gekennzeichnet, daß** die Abtasteinheit aus je zwei Sensoren (14) zu beiden Seiten der Kunststoffbahn (1) besteht, die den Bahnkanten (2) nachgeführt werden und die Abtasteinheit je ein Potentiometer (22) enthält, das entsprechend der Position der Bahnkanten (2) je ein Spannungssignal an einen Regler (12) abgibt, welche beiden Spannungssignale zu einem gemeinsamen Spannungssignal verknüpft werden, das im Regler (12) mit einem vorgegebenen Sollwert, der einem Verlauf der Kunststoffbahn (1) symmetrisch zur Anlagenmitte (4) entspricht, verglichen wird, und wobei der Regler (12) aus der Abweichung des Istwertes vom Sollwert ein Intervall errechnet, in dem die Stellgröße, die Anpresskraft der Abzugswalzen (5), zeitweise so erhöht wird, daß der Sollwert wieder erreicht wird und die Kunststoffbahn (1) wieder symmetrisch zur Anlagenmitte (4) verläuft.

5. Vorrichtung entsprechend Anspruch 3 oder 4, **dadurch gekennzeichnet, daß** die zwei Sensoren auf jeder Seite der Kunststoffbahn optische Sensoren (14) sind, die senkrecht zur Abzugsrichtung motorisch verfahren werden können und den Bahnkanten (2) während des Extrusionslaufes mit je einem Stellmotor (15), gesteuert von einer Motorsteuereinheit (21) über die Signale der Sensoren (14), nachgeführt werden.

6. Vorrichtung entsprechend Anspruch 5, **dadurch gekennzeichnet, daß** die auf beiden Seiten der Kunststoffbahn (1) befindlichen zwei optischen Sensoren (14) Lichtleiter (16) enthalten, welche so entlang der Bahnkante (2) angeordnet sind, daß der eine Lichtleiter (16) von der Kunststoffbahn (1) bedeckt und der andere Lichtleiter (16) unbedeckt bleibt.

7. Vorrichtung entsprechend Anspruch 6, **dadurch gekennzeichnet, daß** die optischen Sensoren (14) unterhalb der Kunststoffbahn (1) zwischen den Rollenbahnwalzen (19) montiert sind.

8. Vorrichtung entsprechend einem oder mehreren der Ansprüche 2 bis 7, **dadurch gekennzeichnet, daß** sie eine Regelgenauigkeit besitzt, die die Abweichung der Kunststoffbahnmitte von der Anlagenmitte (4) im laufenden Betrieb bei maximal ± 2 mm hält.

9. Vorrichtung entsprechend einem oder mehreren der Ansprüche 1 bis 8, **dadurch gekennzeichnet, daß** sie geeignet ist, den Lauf von Kunststoffbahnen (1) mit glatten oder glatt strukturierten Oberflächen, unterschiedlicher Einfärbung und Transparenz, mit einer Breite von 0,5 bis 2,5 m und einer Dicke von 0,5 bis 25 mm zu regeln.

## Claims

1. Apparatus for regulating the direction of travel of an extruded plastics web (1) after leaving a calender formed by rollers (5) and a roller gap (7) in an extrusion installation, containing two take-off rollers (5) mounted paraxially and forming the roller gap (7), and actuating members (11) acting separately on the roller bearings (6) on both sides in order to adjust the force acting in the roller gap (7), further comprising a sensing unit and a regulating unit, the sensing unit emitting voltage signals to the regulating unit which regulates the pressing force of the take-off rollers (5) by means of the actuating members (11) by increasing the pressing force of the take-off rollers (5) on the side of the web of material the edge (2) of which is at the shortest distance from the centre (4) of the apparatus, until the plastics web (1) is aligned symmetrically with the centre (4) of the apparatus during operation, **characterised in that** the sensing unit detects the distances of the edges (2) of the web from the centre (4) of the apparatus.

2. Apparatus according to claim 1, **characterised in that** the direction of travel of the plastics web (1) is horizontal.

3. Apparatus according to claim 1 or 2, containing a sensing unit mounted between the calender (5, 7) and the extrusion apparatus, comprising sensors (14) for detecting the travel of the plastics web relative to the centre (4) of the apparatus, and an electronic regulating unit for acting upon the actuating members (11) as a function of the positions of the edges (2) of the web.

4. Apparatus according to claim 3, **characterised in that** the sensing unit consists of two sensors (14) on each side of the plastics web (1), which follow the edges (2) of the web and the sensing unit in each case contains a potentiometer (22) which, depending on the position of the web edges (2), delivers a voltage signal to a regulator (12), the two voltage signals being combined to form a common voltage signal which is compared in the regulator (12) with a pre-defined setpoint value corresponding to the travel of the plastics web (1) symmetrically with the centre (4) of the apparatus, and the regulator (12) calculating, from the deviation of the actual value from the setpoint value, an interval in which the control variable, namely the pressing force of the take-off rollers (5), is intermittendy increased such that the setpoint value is reached again and the plastics web (1) again runs symmetrically with the centre (4) of the apparatus.

5. Apparatus according to claim 3 or 4, **characterised in that** the two sensors on each side of the plastics web are optical sensors (14) which can be motor-driven perpendicularly to the take-off direction and follow the edges (2) of the web during the exuusion movement by means of an actuating motor (15) in each case, which is controlled by a motor control unit (21) by means of the signals from the sensors (14).

6. Apparatus according to claim 5, **characterised in that** the two optical sensors (14) located on both sides of the plastics web (1) contain optical fibres (16) which are arranged along the edge (2) of the web such that one optical fibre (16) is covered by the plastics web (1) and the other optical fibre (16) remains uncovered.

7. Apparatus according to claim 6, **characterised in that** the optical sensors (14) are mounted underneath the plastics web (1) between the conveyor rollers (19).

8. Apparatus according to one or more of claims 2 to 7, **characterised in that** it has a precision of adjustment which keeps the deviation of the centre line of the plastics from the centre (4) of the apparatus during operation at a maximum ± 2 mm.

9. Apparatus according to one or more of claims 1 to 8, **characterised in that** it is suitable for regulating the travel of plastics webs (1) with smooth or smoothly structured surfaces, different coloration and transparency, with a width of 0.5 to 2.5 m and a thickness of 0.5 to 25 mm.

## Revendications

1. Dispositif pour régler la direction dans laquelle une bande en matière plastique (1) extrudée se déplace après qu'elle a quitté un laminoir lisseur, formé par des cylindres (5) et par une emprise (7), dans une installation d'extrusion, comportant deux cylindres de retrait (5) montés parallèlement à l'axe et formant l'emprise (7) et des actionneurs (11) qui agissent séparément sur les paliers de laminoir (6) placés de chaque côté et qui servent à régler la force qui agit dans l'emprise (7), et comportant en outre une unité de détection et une unité de réglage, l'unité de détection émettant des signaux de tension destinés à l'unité de réglage qui règle à l'aide des actionneurs (11) la force de pression des cylindres de retrait (5) du fait que la force de pression des cylindres de retrait (5), sur le côté de la plaque dont le bord de bande (2) a la plus petite distance par rapport au milieu d'installation (4), augmente jusqu'à ce que la bande en matière plastique (1) soit orientée symétriquement par rapport au milieu d'installation (4) pendant le déplacement,
**caractérisé en ce que**
l'unité de détection détecte la distance des bords de bande (2) par rapport au milieu (4) de l'installation.

2. Dispositif selon la revendication 1,
**caractérisé en ce que**
la direction dans laquelle se déplace la bande en matière plastique (1) est horizontale.

3. Dispositif selon la revendication 1 ou 2,
**caractérisé par**
une unité de détection disposée entre le laminoir lisseur (5, 7) et l'installation d'extrusion, des capteurs (14) pour déterminer le tracé de la bande en matière plastique par rapport au milieu (4) de l'installation, ainsi qu'une unité de réglage électronique pour agir sur les actionneurs (11) en fonction de la position des bords de bande (2).

4. Dispositif selon la revendication 3,
**caractérisé en ce que**
de chaque côté de la bande en matière plastique (1) chaque unité de détection comprend deux capteurs (14) guidés sur les bords de bande (4) et chaque unité de détection comprend un potentiomètre (22) qui en fonction de la position des bords de bande (22) émet un signal de tension destiné à un régulateur (12), ces deux signaux de tension sont rassemblés en un signal de tension commun qui est comparé dans le régulateur (12) à une valeur de consigne prédéfinie pour laquelle la bande en matière plastique (1) a une extension symétrique par rapport au milieu d'installation (4), à partir de l'écart entre la valeur réelle et la valeur de consigne le régulateur (12) calcule un intervalle dans lequel la grandeur de réglage, la force de pression des cylindres de retrait (5), est temporairement augmentée pour atteindre la valeur de consigne et pour déplacer la bande en matière plastique (1) de nouveau symétriquement par rapport au milieu d'installation (4).

5. Dispositif selon la revendication 3 ou 4,
**caractérisé en ce que**
les deux capteurs de chaque côté de la bande en matière plastique sont des capteurs optiques (14) qui peuvent se déplacer perpendiculairement à la direction de retrait grâce à un moteur et dont chacun est guidé sur les bords de bande (2) pendant le parcours d'extrusion à l'aide d'un servomoteur (15) commandé par une unité de commande de moteur (21) au moyen des signaux des capteurs (14).

6. Dispositif selon la revendication 5,
**caractérisé en ce que**
les deux capteurs optiques (14) situés des deux côtés de la bande en matière plastique (1) contiennent des guides optiques (16) disposés le long du bord de bande (2) de telle manière que l'un des guides optiques (16) soit recouvert par la bande en matière plastique (1) et que l'autre guide optique (16) reste non recouvert.

7. Dispositif selon la revendication 6,
**caractérisé en ce que**
les capteurs optiques (14) sont montés au-dessous de la bande en matière plastique (1) entre les rouleaux de transporteur (19).

8. Dispositif selon une ou plusieurs des revendications 2 à 7,
**caractérisé en ce que**
son exactitude de réglage est telle que l'écart entre le milieu de la bande en matière plastique et le milieu d'installation (4) est au maximum de ± 2 mm pendant le déplacement.

9. Dispositif selon une ou plusieurs des revendications 1 à 8,
**caractérisé en ce qu'**
il est adapté pour régler le parcours de bandes en matière plastique (1) comportant des surfaces lisses ou à structure lisse, un encrage et une transparence différentes, une largeur comprise entre 0,5 et 2,5 m et une épaisseur comprise entre 0,5 et 25 mm.
